# EUROPEAN PATENT APPLICATION

(11) **EP 1 077 166 A2**
(43) Date of publication of application: **21.02.2001**
(21) Application number: 00116658.6
(22) Date of filing: 02.08.2000
(51) Int. Cl.: B60T 7/12, B60T 8/48

(54) **A vehicle brake arrangement**

(30) Priority: 14.08.1999 GB 9919175
(71) Applicant: ROVER GROUP LIMITED, Warwick, Warwickshire CV34 6RG (GB)
(72) Inventor: Mercer, George Howard, West Midlands B93 9ED (GB)
(74) Representative: Schmidt, Günter, Dipl.-Ing.

(57) **Abstract**

A vehicle brake arrangement is provided for a vehicle 1 including a vehicle proximity sensor 4. The arrangement is configured whereby the vehicle proximity sensor 4 will provide a proximity signal which is utilised by a control device 7 in order to vary the brake pressure provided by a booster pump 8 in the brake mechanism 2 of the vehicle 1. Thus, dependent upon the proximity of other vehicles to the vehicle 1 the brake pressure for unit displacement of a brake pedal 9 of the brake mechanism 2 is altered. By such means, rapidity of braking response is improved where the driver of the vehicle 1 needs to provide heavy or emergency braking.

## Description

The present invention relates to a vehicle brake arrangement and more particularly to a vehicle brake arrangement used in association with a proximity sensor system incorporated in a motor vehicle.

It is proposed to increasingly use proximity sensors within motor vehicles in order to automatically apply that vehicles braking mechanism when the vehicle approaches another. Thus, with such proximity sensors it will be appreciated there will be a potential decrease in the number of vehicle to vehicle collisions and therefore a significant improvement in safety. These proximity sensors typically utilise radar-type mechanisms to determine through an echo, and possibly Doppler response, the distance between two vehicles such that an appropriate gap can be maintained between these vehicles for safety purposes.

It will be understood by their very nature these proximity sensor and brake mechanism combinations must be relatively mild and progressive in operation such that normal vehicle motion is not radically altered. Regrettably, with regard to situations where heavy or emergency braking is required it is still necessary for the vehicle driver to rapidly actuate the vehicle braking mechanism. Examples of situations where heavy braking may be required include where a vehicle cuts into a flow of traffic or a pedestrian inadvertently steps out in front of the vehicle.

Unfortunately, it has been found by experience that when a proximity sensor and brake mechanism combination is incorporated within a vehicle there is a significant increase in driver relaxation due to the greater surety of avoiding vehicle to vehicle collisions. Thus, when it is necessary to apply heavy or emergency braking it has been found that the driver may take longer to react to such situations. In such circumstances, it will be desirable to improve braking operation in order to aviod the problems of this slower driver reaction time.

It is an object of the present invention to provide a vehicle brake arrangement which combines a proximity sensor with a vehicle braking mechanism such that the problems with regard to situations where heavy braking is required are avoided.

In accordance with the present invention there is provided a vehicle brake arrangement wherein the arrangement includes a proximity sensor system and brake boost means, the proximity sensor being configured in use to provide a proximity signal indicative of proximity of a vehicle including the arrangement to another vehicle whilst the brake boost means is coupled to a brake mechanism whereby the brake pressure within that brake mechanism for unit displacement of a brake pedal is boosted to a degree determined by the value of the proximity signal.

Typically, the boost means will comprise a specific boost pump for the anti-lock brake system (ABS) pump of the brake mechanism which may be part of a traction control system for the vehicle.

Normally, the vehicle brake arrangement will be arranged to ignore stationary or low speed proximity signals.

An embodiment of the present invention will now be described by way of example only with reference to the accompanying drawing in which:
Figure 1 is a pictorial representation of a brake arrangement in combination with a proximity sensor system within a motor vehicle; and
Figure 2 is a graphical representation illustrating distance between vehicles in comparison with brake pressure for a constant brake pedal position for a range of vehicle speeds.

As indicated above, proximity sensor systems are being fitted to some new vehicles in order to provide an adaptive cruise control for highway travel. Typically, the vehicle will be able to travel close to the vehicle in front due to the dependence upon the proximity sensor ensuring there is an appropriate stopping distance between vehicles for safety. In such circumstances, as indicated above, the driver of the vehicle may become more complacent and in any event may have to react quicker to dangerous situations due to closer travel between vehicles.

In previous systems brake pedal travel within a braking mechanism in relation to stopping performance is generally constant irrespective of how close two vehicles approach one anther. In such circumstances, the brake mechanism does not provide any additional help to improve driver braking reaction response to dangerous situations.

In accordance with the present invention a proximity system used within a vehicle is arranged to provide a proximity signal utilised by a boost mechanism within the brake mechanism in order to increase brake pressure for unit brake pedal displacement.

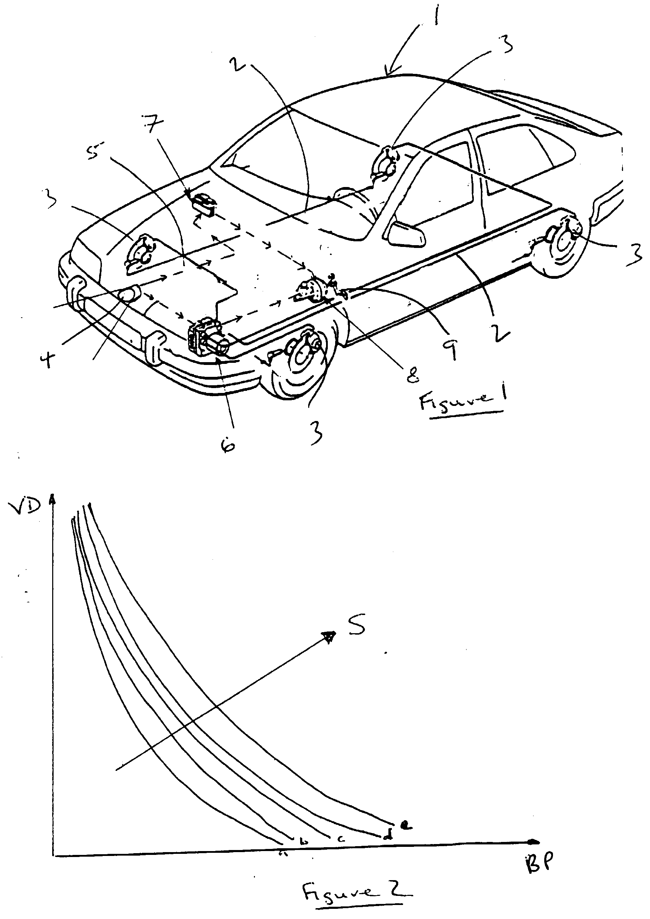

Figure 1 is a pictorial illustration of a motor vehicle incorporating a brake arrangement in accordance with the present invention. Thus, the vehicle 1 includes a braking mechanism or system 2 shown pictorially as two lines. This brake mechanism 2 comprises respective brake callipers 3 associated with each wheel of the vehicle 1 and actuated by brake pressure pump 8 under the control of an ABS or ECU controller 7 in proportion to pedal pressure. The vehicle 1 also includes a proximity detector including a radar sensor 4 which is linked into the braking system 2 in order to proportionally apply braking to the vehicle 1 dependent upon the proximity of a vehicle detected by the radar sensor 4. Thus, the sensor 4 provides a proximity signal to a control device such as an ABS controller or alternative electronic control unit 7 in the schematic direction 5 and also in the embodiment depicted through an ABS modulator 6. The controller 7 and modulator 6 thereupon activate a brake pressure boost pump 8 in order to precipitate limited braking upon the wheels of the vehicle 1 such that the gap between the vehicle 1 and the detected vehicle through the sensor 4 is widened to that acceptable for safety in view of the vehicles speed and other factors such as brakes condition, road surface conditions etc.

By the above described means, it will be appreciated that the vehicle 1 through a feed back control mechanism will be maintained at a safe distance from a vehicle in front of the sensor 4. Thus, in a relatively steady state situation, where the vehicle has a stable speed and direction, it will be understood that the proximity sensor system and brake mechanism combination provides safer operation of the vehicle 1.

Unfortunately, vehicular movements are rarely stable in that other vehicles will overtake, brake and perform unexpected manoeuvres along with obvious requirements to adjust vehicle 1 operation dependent upon traffic flow and pedestrians. In such circumstances, it is necessary for the driver of the vehicle 1 to provide the necessary heavier braking to more rapidly slow the vehicle 1 and to provide emergency braking to avoid accidents.

Driver induced braking is conventionally provided through a brake pedal suitably actuated by the driver. Traditionally, this brake pedal acted directly upon the hydraulic mechanism to actuate the braking callipers 3 after appropriate force magnification. However, more recently brake pedal operation has taken the form of an electrical switch by which a pump is arranged to increase, or decrease, braking effort applied to the brake callipers 6. In any event, the brake pressure for unit displacement of the brake pedal has remained constant within the limits of pre-gauging and other wear and tear.

With regard to inclusion of proximity arrangements as indicated previously, these proximity systems allow the vehicle 1 to be driven closer to other vehicles with greater safety but may also lure the driver into a false sense of security. In such circumstances, and in any event, it will be understood that when the driver does apply the brakes for halting the vehicle 1 or emergency purposes then either the brakes must be more efficient or driver reaction time from identification must be increased.

In the present invention, it is proposed to utilise the proximity signal provided by the proximity sensor system and in particular the proximity sensor 4 in order to alter the unit response of the brake pedal to displacement dependent upon the proximity determined gap between respective vehicles. In such circumstances, when the driver activates the brake pedal it will be understood for the same unit degree of displacement of that brake pedal greater braking effort will be applied to the brake callipers 3 and therefore the vehicle should slow quicker. In effect, because of the greater brake pressure for displacement the brake callipers should apply greater braking pressure in a shorter period of time.

The present vehicle brake arrangement in pictorial and schematic views is similar to previous systems as depicted in Figure 1. Thus, the proximity sensor 4 still provides a proximity signal to the control device 7 and the ABS modulator 6. Thus, the ABS modulator 6 applies sufficient braking effort the callipers 3 in order to vary the gap between the vehicle 1 and a vehicle in front of the sensor 4. However, the control device 7 responds to the proximity signal by altering the booster pump 8 response to pedal 9 operation to give more brake pressure for unit pedal 9 displacement. Thus, previously the symbolic link 5 did not occur other than in order to provide general operational information to the controller device 7. The distinction of the present invention is that the controller device 7 now utilises the proximity signal provided by the sensor 4 in order to adjust the booster pump 8 response to pedal displacement 9.

Clearly, as the vehicle 1 becomes closer to another vehicle the control device 7 will configure the booster pump 8 in order to provide greater brake pressure and therefore brake function for unit displacement of the pedal 9. If the sensor 4 were to fail to detect another vehicle the booster pump 8 would be configured to provide a normal level of brake response through pedal 9 displacement. However, as the vehicle 1 approaches another vehicle as sensed by the sensor 4 then the control device 7 will progressively either absolutely or incrementally increase the brake pressure applied for unit displacement of the pedal 9.

Similarly, if the sensor 4 were to identify that the vehicle 1 was passing an adjacent the line of parked cars or other stationary objects and so that there is an increased possibility of pedestrian step-out then the control device 7 could reconfigure the booster pump 8 unit response for displacement of the pedal 9 accordingly.

In order to provide at least a limp-home facility it will be appreciated that if the sensor 4 should malfunction or otherwise fail to provide a proximity signal then the control device 7 will at least configure the booster pump 8 to provide a normal level of brake function response for pedal 9 displacement.

As indicated previously, typically the present vehicle brake arrangement will be provided through adaptation of a vehicle anti-lock braking system or traction control system. In such circumstances, the booster pump 8 will be provided by these respective ABS or TC systems incorporated within the brake mechanism of the vehicle 1. However, it will also be understood that a specific booster pump 8 could be provided within the brake mechanism independently operated by the controller device 7 in response to the proximity signal provided by the sensor 4. In such circumstances, the present vehicle brake arrangement would not interfere with the existing ABS or TC system of the vehicle 1 and could be provided as a retro-fit to the vehicle 1 braking mechanism when a proximity detection system is added or incorporated into the vehicle 1.

Clearly, it is advantageous if the vehicle incorporating the present vehicle braking arrangement includes an anti-lock braking system as it will be understood that the braking effort applied by the driver through the pedal 9 will be variable and therefore will more likely to precipitate brake lock in emergency or heavy braking situations. The anti-lock braking system in accordance with known operation would ensure skidding as a result of brake lock is avoided.

Figure 2 illustrates in graphical representation the relationship between brake pressure (BP) to vehicle separation distance (VD) for several vehicle speeds (S). Each line a - e represents a different vehicle speed such that brake pressure BP for a constant brake pedal position differs dependent upon the distance VD between vehicles determined by the proximity sensor system of the vehicle. Thus, it will be appreciated that the pedal displacement or travel in order to provide adequate braking function through a given brake pressure is shorter with closer proximity between vehicles and higher speeds. In such circumstances, the closer a vehicle is to another the greater the pressure response to unit brake pedal displacement and so a more rapid braking of the vehicle should result.

Typically, the present brake arrangement will be incorporated within a cruise control arrangement within a vehicle such that that cruise control proximity radar and brake mechanism can be utilised in order to achieve the necessary variation in brake pressure for similar brake pedal displacement with reference to vehicle spacing and speed. It will be understood that such cruise control arrangements typically include the necessary booster pump and control device which can be adapted to perform in accordance with the present invention.

It will be understood that the present variation in brake pressure with vehicle proximity would only be operative when in a cruise or otherwise when the proximity sensor was operational. Thus, a normal brake pressure response would be provided at all other times for driver response consistency.

## Claims

1. A vehicle brake arrangement wherein the arrangement includes a proximity sensor system and brake booster means, the proximity sensor being configured in use to provide a proximity signal indicative of proximity of a vehicle including the arrangement to another vehicle whilst the brake boost means is coupled to a brake mechanism whereby the brake pressure within that brake mechanism for unit displacement of a brake pedal is boosted to a degree determined by the value of the proximity signal.

2. An arrangement as claimed in Claim 1 wherein the brake booster means comprises a specific booster pump located within the brake mechanism.

3. An arrangement as claimed in Claim 1 wherein the brake booster means comprises an anti-lock brake system pump integral with the brake mechanism of the vehicle.

4. An arrangement as claimed in Claim 3 wherein the anti-lock brake system pump is part of a traction control system for the vehicle.

5. An arrangement as claimed in any preceding claim wherein the brake boost means is configured to ignore proximity signals indicative of stationary other vehicles or obstacles.

6. An arrangement as claimed in any preceding claim wherein the brake booster means is configured to have no effect upon brake pressure when the vehicle is at a predetermined low speed.

7. A vehicle brake arrangement hereinbefore described with reference to the accompanying drawings.

8. A motor vehicle including a vehicle brake arrangement as claimed in any preceding claim.
